Europäisches Patentamt

European Patent Office

Office européen des brevets

(19)

(11) EP 1 058 434 A2

(12) **EUROPEAN PATENT APPLICATION**

(43) Date of publication:
06.12.2000 Bulletin 2000/49

(51) Int Cl.$^7$: **H04L 27/26**

(21) Application number: 00304428.6

(22) Date of filing: 25.05.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **31.05.1999 JP 15205999**
**09.08.1999 JP 22538999**

(71) Applicant: **SONY CORPORATION**
**Tokyo (JP)**

(72) Inventors:
• **Maekawa, Takaji**
**Shinagawa-ku, Tokyo (JP)**
• **Sugita, Takehiro**
**Shinagawa-ku, Tokyo (JP)**
• **Iwasaki, Jun**
**Shinagawa-ku, Tokyo (JP)**

(74) Representative: **Nicholls, Michael John**
**J.A. KEMP & CO.**
**14, South Square**
**Gray's Inn**
**London WC1R 5LX (GB)**

(54) **Symbol synchronisation in multicarrier receivers**

(57)    An initial synchronization signal is detected, and the detected synchronization timing is maintained with high accuracy. A threshold value for detecting a synchronization signal is set to a default value, and the width of a window for detecting a synchronization signal is set to a default value. Then, the detected state of the synchronization signal is detected, and control is performed until the default value of the threshold value and the default value of the window width reach optimum values in accordance with the detected result. Also, a periodic estimated synchronization timing is generated from the acquired initial synchronization, the synchronization signal is detected in accordance with this estimated synchronization timing, and the error of the estimated synchronization timing is corrected. Demodulation is performed in synchronization with the synchronization timing, an error rate at the time of the demodulation is calculated, and correctness of the estimated synchronization timing is determined according to the error rate. When the determination shows that the estimated synchronization timing is in error, processing starting from a step for acquiring an initial synchronization is performed, and when it is otherwise, processing of a step for generating a periodic estimated synchronization timing and subsequent steps is repeated.

FIG. 3

EP 1 058 434 A2

**Description**

The present invention relates to a receiving apparatus having a function for detecting or retaining a synchronization signal which is periodically contained in a transmission signal, and a receiving method therefor, and relates to a program by which the receiving method is performed.

In communication apparatuses which constitute a communication network, such as a wireless network, it has hitherto been important that synchronization be acquired on the receiving side in order to accurately demodulate received information.

For this reason, a communication apparatus always comprises a synchronization processing section for acquiring syncllronization in this manner and for performing subsequent synchronization retention. In a typical synchronization processing section, a synchronization signal is detected when communication starts in order to acquire synchronization. The acquired synchronization is maintained by a synchronization retaining section, and a synchronization timing is generated. In the synchronization retaining section, a process for retaining synchronization is performed based on feedback information of the synchronization timing. A demodulation timing is generated from this synchronization timing, and in a received-data demodulation section following the synchronization processing section, a demodulation process is performed based on this demodulation timing.

However, in a conventional signal receiving apparatus, there is a problem in that synchronization cannot be maintained quickly during an initial synchronization time. Also, in a conventional receiving apparatus, if synchronization retention is achieved by the synchronization processing section, there is a problem in that it is difficult to correct a synchronization timing. In a synchronization processing section of the conventional receiving apparatus, synchronization retention is performed based on feedback information of only a synchronization timing. For this reason, there is no means to reflect a demodulation result by a processing section following the synchronization processing section, for example, a demodulation section.

For example, in a case where a hit (momentary line disturbances) occurs in a wireless propagation environment during wireless communication and synchronization retention is performed at a particular erroneous timing, the demodulation result in a demodulation circuit thereafter becomes worse. However, in a conventional communication apparatus, since there is no means for reflecting the demodulation result by the demodulation section, the synchronization timing cannot be corrected, and there are cases in which the synchronization retaining function cannot be performed accurately.

As described above, in a wireless radio-wave propagation environment, in a case where radio waves are interrupted for a predetermined period of time, the synchronization retaining function must be utilized by some method, and the synchronization retaining function must correct the synchronization timing in accordance with variations of the propagation state.

The present invention has been achieved in view of such circumstances.

According to one aspect of the present invention, there is provided a receiving apparatus comprising: a threshold-value setting unit for setting a threshold value for detecting a synchronization signal contained in a transmission signal to a default value; a window-width setting unit for setting the width of a window for detecting the synchronization signal to a default value; a detector for detecting the detected state of the synchronization signal; and a controller for performing control so that the default threshold value set by the threshold-value setting unit and the default value of the window width set by the window-width setting unit reach optimum values in accordance with the detection result of the detector.

According to the receiving apparatus of such a construction, a receiving apparatus can be obtained in which a threshold value and the width of a window are set to detect a synchronization signal contained in a transmission signal, the detected state of the synchronization signal is detected, and then control is performed until the threshold value and the width of the window reach optimum values in accordance with the detection result.

According to a second aspect of the present invention, there is provided a signal receiving method comprising the steps of: setting a threshold value for detecting a synchronization signal contained in a transmission signal to a default value; setting the width of a window for detecting the synchronization signal to a default value; detecting the detected state of the synchronization signal; and performing control so that the default threshold value and the default value of the window width reach optimum values in accordance with the detection result in the detection step.

According to the receiving method of such steps, a threshold value and the width of a window are set to detect a synchronization signal contained in a transmission signal, the detected state of the synchronization signal is detected, and then control is performed until the threshold value and the width of the window become optimum values.

According to a third aspect of the present invention, there is provided a medium for causing a processor to execute a program, the program comprising the steps of: setting a threshold value for detecting a synchronization signal contained in a transmission signal to a default value; setting the width of a window for detecting the synchronization signal to a default value; detecting the detected state of the synchronization signal; and performing control so that the default threshold value set in the threshold-value setting step and the default value of the window width set in the window-width setting step reach optimum values in accordance with the detection result in the detection step.

As a result of executing a program containing such steps, a threshold value and the width of a window are set to detect a synchronization signal contained in a transmission signal, the detected state of the synchronization signal is detected, and then control is performed until the threshold value and the width of the window reach optimum values in accordance with the detection result in the detection step.

According to a fourth aspect of the present invention, there is provided a receiving apparatus having a function for detecting a synchronization signal contained at a predetermined cycle in a transmission signal and for retaining the synchronization signal, the receiving apparatus comprising: a synchronization signal detector for detecting a synchronization signal from a received signal when a synchronization signal detection window of a predetermined duration for detecting a synchronization signal is open; a synchronization retaining unit for retaining the detected and acquired synchronization and for generating a synchronization timing; a demodulation timing generator for generating a demodulation timing at which demodulation is performed from the synchronization timing; a demodulator for demodulating data at the demodulation timing and for calculating an error rate representing whether or not demodulation has been performed normally; and a synchronization determination unit for determining whether or not the synchronization timing is correct on the basis of the error rate and for correcting the synchronization timing in accordance with the determination result.

According to the receiving apparatus of such a construction, when a synchronization signal is detected from a received signal of an OFDM (Orthogonal Frequency Division Multiplex) method while a synchronization signal detection window of a predetermined duration at which the synchronization signal detector performs synchronization signal detection is open, the synchronization retaining unit generates a synchronization timing based on the detected synchronization signal and performs synchronization retention. The demodulation timing generator generates a demodulation timing on the basis of a synchronization timing output from the synchronization retaining unit and sends it to the demodulator. The demodulator performs a demodulation of data at this demodulation timing and calculates an error rate during the demodulation. The determination unit determines whether or not the synchronization timing is correct on the basis of this error rate during the demodulation. When it is determined that the synchronization timing is not correct, a process for correcting the synchronization timing is performed.

According to a fifth aspect of the present invention, there is provided a receiving method for detecting a synchronization signal generated at a predetermined cycle and for retaining the synchronization signal, the receiving method comprising the steps of: detecting a synchronization signal from a received signal and acquiring an initial synchronization; generating a periodic estimated synchronization timing from the acquired initial synchronization; detecting a synchronization signal at the periodic estimated synchronization timing; correcting an error of the estimated synchronization timing from the detected synchronization timing; generating a demodulation timing at the synchronization timing; performing demodulation at the demodulation timing and calculating an error rate during the demodulation; determining whether or not the estimated synchronization timing is a normal timing on the basis of the error rate; and performing starting from a step for acquiring the initial synchronization when the determination is an estimated synchronization timing error and, when it is otherwise, repeating a step for generating the periodic estimated synchronization timing and subsequent steps.

According to the receiving method of such steps, when an initial synchronization is acquired from the synchronization signal which is detected from the received signal of an OFDM method, a periodic estimated synchronization timing is generated based on the initial synchronization. Detection of a synchronization signal is performed at the periodic estimated synchronization timing, and based on this, an error of the estimated synchronization timing is corrected. Furthermore, a demodulation timing is generated from the synchronization timing, and demodulation is performed in accordance with the demodulation timing. During the demodulation, a demodulation error rate is calculated. It is determined whether or not the estimated synchronization timing is a normal timing according to this error rate. When it is determined that the estimated synchronization timing is a normal timing, the estimated synchronization timing is maintained as it is, and processing of a step for generating estimated synchronization timing and subsequent steps is repeated. When it is determined that the estimated synchronization timing is in error, an initial synchronization acquiring step for acquiring a synchronization signal is performed, and a new synchronization signal is acquired.

The hereinafter described embodiments of the present invention can detect a synchronization signal quickly and reliably when an initial synchronization signal is detected and can maintain the detected synchronization timing with high accuracy.

The above and further aspects and novel features of the invention will become more fully apparent from the following detailed description given by way of non-limitative example with reference to the accompanying drawings, in which:

Fig. 1 is a block diagram showing an example of the construction of a signal receiving apparatus according to a first embodiment of the present invention;
Fig. 2 is a block diagram showing an example of the construction of a frame correlation detection section according to the first embodiment of the present invention;

Fig. 3 is a block diagram showing an example of the construction of a DLL (delay locked loop) according to the first embodiment of the present invention;

Fig. 4 is a flowchart illustrating an example of a synchronization signal detection step according to the first embodiment of the present invention;

Fig. 5 is a diagram illustrating a synchronization signal detected by the correlation detection section in Fig. 2 and a cross-correlation value;

Figs. 6A and 6B are diagrams showing a synchronization signal detection window width;

Fig. 7 is a timing chart illustrating a detection result of the synchronization signal;

Figs. 8A, 8B, and 8C are illustrations of media;

Fig. 9 is a block diagram showing an example of the construction of a personal computer;

Fig. 10 is a block diagram showing another example of the construction of a frame correlation detection section according to the first embodiment of the present invention;

Fig. 11 is a block diagram showing yet another example of the construction of a frame correlation detection section according to the first embodiment of the present invention;

Fig. 12 is a block diagram of a synchronization processing section of a receiving apparatus according to a second embodiment of the present invention;

Fig. 13 is a flowchart of a synchronization retaining step of the receiving apparatus according to the second embodiment of the present invention;

Fig. 14 is a flowchart of an initial synchronization acquiring step of the receiving apparatus according to the second embodiment of the present invention;

Fig. 15 is a flowchart of a demodulation step and synchronization determination step of the receiving apparatus according to the second embodiment of the present invention;

Fig. 16 is a synchronization detected state diagram when a synchronization signal is compensated for, of the receiving apparatus according to the second embodiment of the present invention;

Fig. 17 is a synchronization detected state diagram when a misdetection of a synchronization signal is prevented, of the receiving apparatus according to the second embodiment of the present invention; and

Fig. 18 is a synchronization detected state diagram when a synchronization signal is in error, of the receiving apparatus according to the second embodiment of the present invention.

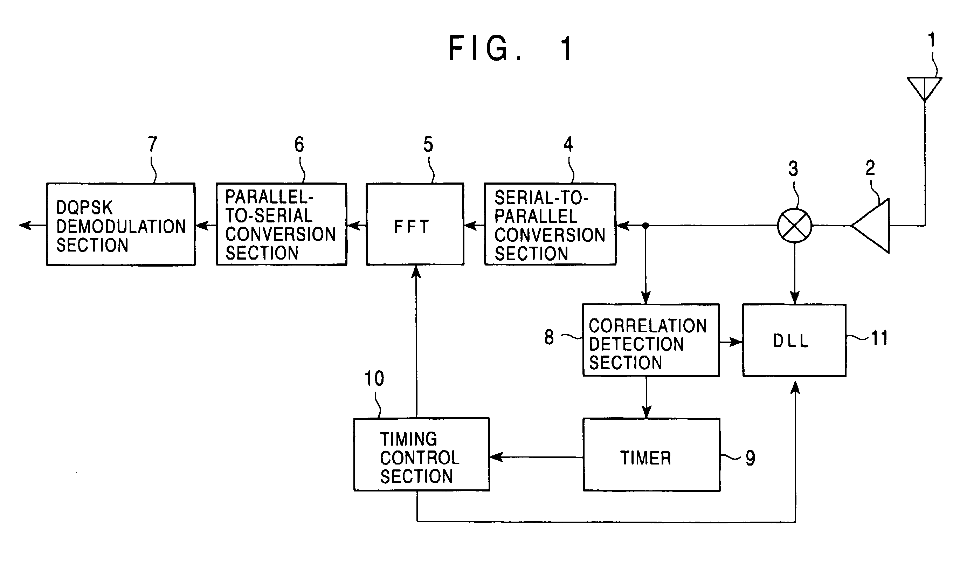

A first embodiment of the present invention will now be described with reference to Figs. 1 to 11.

Fig. 1 is a block diagram of a receiving apparatus according to this embodiment. The receiving apparatus in this embodiment is used for, for example, terrestrial digital television broadcasts and mobile communications, and is a receiving apparatus for receiving a transmission signal employing an OFDM (Orthogonal Frequency Division Multiplex) method. Also, for the modulation method of a transmission signal (OFDM segment), a DQPSK (Differential Quadrature Phase Shift Keying) method is used. In the following description, when a description of an OFDM signal is given, it refers to a signal modulated by an OFDM method.

A low noise amplifier 2 amplifies a signal received through an antenna 1 and supplies the resulting signal to a frequency conversion section 3. The frequency conversion section 3 multiplies an internal timing signal input from a DLL (Delay Locked Loop) 11 by the received signal from the low noise amplifier 2, converts the frequency of the received signal into a baseband signal, and supplies it to a serial-to-parallel conversion section 4 and a correlation detection section 8.

The serial-to-parallel conversion section 4 converts the received signal from serial into parallel form, and supplies the resulting signal to a fast-Fourier-transform (FFT) section 5. In order to demodulate the symbol of a sub-carrier of the received signal, the fast-Fourier-transform section 5 Fourier-transforms the received signal in accordance with a demodulation timing signal input from a timing control section 10 and supplies the demodulated signal to a parallel-to-serial conversion section 6. The parallel-to-serial conversion section 6 converts the input signal into serial form, and supplies it to a DQPSK demodulation section 7. The DQPSK demodulation section 7 demodulates a signal of each carrier, which is modulated by a DQPSK method.

The correlation detection section 8 computes a cross-correlation value between a signal input from the frequency conversion section 3 and a pattern of a prestored synchronization signal, compares the computed cross-correlation value with a preset threshold value, and generates a synchronization detection signal. The synchronization signal detected by this correlation detection section 8 is a synchronization signal allocated in a predetermined interval of a signal transmitted by the OFDM method. The construction of the correlation detection section 8 will be described later.

A timer 9 generates a frame synchronization detection timing signal on the basis of the synchronization detection signal, and supplies it to the timing control section 10. The timing control section 10 supplies the frame synchronization detection timing signal to a DLL 11, generates a demodulation timing signal indicating the start timing of a fast Fourier transform, and supplies it to the fast-Fourier-transform section 5. The DLL 11 generates an internal timing signal synchronized with the frame synchronization detection timing signal, and supplies it to the frequency conversion section 3.

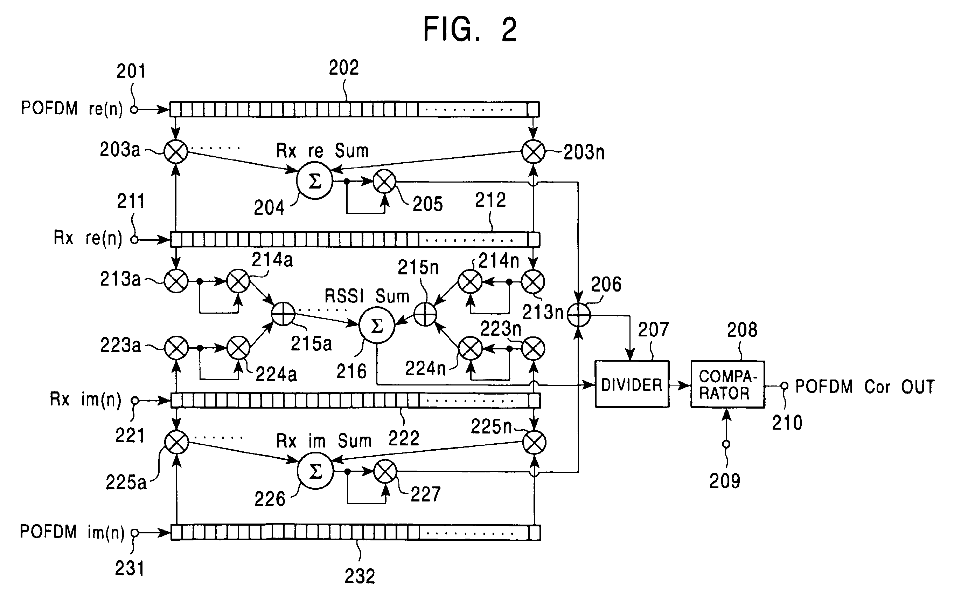

Fig. 2 is a diagram showing an example of a construction for detecting a synchronization signal by the correlation detection section 8. From an input terminal 201, the real-number part of an OFDM code for frame synchronization detection, which is provided in advance inside the receiving apparatus, is supplied to a shift register 202. Also, the real-number part of the received signal obtained in an input terminal 211 is supplied to a shift register 212. The real-number components of the received signal which is frequency-converted by the frequency conversion section 3 are supplied to this input terminal 211.

Then, the data which is set in each stage of both of the shift registers 202 and 212 is individually multiplied by multipliers 203a, 203b, ... 203n, which are prepared for the number of the shift registers, the multiplied values of the respective multipliers 203a to 203n are integrated by an integrator 204, and a correlation value Rx re Sum of the real-number part is obtained. A squared value such that the correlation value Rx re Sum of the real-number part is squared by a squaring circuit 205 is supplied to an adder 206.

The imaginary-number part of the OFDM signal for frame synchronization detection, which is provided in advance, inside the receiving apparatus, obtained in an input terminal 231, is supplied to a shift register 232. Also, the imaginary-number part of the received signal, which is obtained in the input terminal 231, is supplied to a shift register 222. The imaginary-number components of the received signal which is frequency-converted by the frequency conversion section 3 are supplied to this shift register 211.

Then, the data which is set in each stage of both of the shift registers 222 and 232 is individually multiplied by multipliers 225a, 225b, ... 225n, which are prepared for the number of stages of the shift registers, the multiplied values of the respective multipliers 225a to 225n are integrated by an integrator 226, and a correlation value Rx im Sum of the imaginary-number part is obtained. A squared value such that the correlation value Rx im Sum of the imaginary-number part is squared by a squaring circuit 227 is supplied to the adder 206. The OFDM signal for frame synchronization detection, obtained in the input terminals 201 and 231, is prepared in advance in storage means (not shown) inside the receiving apparatus, and is the same data as the data before the synchronization signal transmitted as the OFDM signal from a base station or the like is demodulated from the OFDM signal.

In the adder 206, the supplied correlation value of the real-number part and the supplied correlation value of the imaginary-number part are added together, yielding a correlation value Sum Store of the received signal. The correlation value Sum Store obtained by this adder 206 is supplied to a divider 207.

Also, the received data of the real-number part, which is set in each stage of the received signal 212, is supplied to adders 215a to 215n via multipliers 213a to 213n and squaring circuits 214a to 214n, and the received data of the imaginary-number part, which is set in each stage of the shift register 222, is supplied to the adders 215a to 215n via multipliers 223a to 223n and squaring circuits 224a to 224n, whereby the received data of the real-number part and the received data of the imaginary-number part are added together. Then, the received data added by each of the adders 215a to 215n is supplied to an integrator 216 whereby the data is integrated to obtain received power RSSI Sum. The received power RSSI Sum obtained by this integrator 216 is supplied to the divider 207.

In the divider 207, the correlation value Sum Store of the received signal is divided by the received power RSSI Sum in order to obtain a solution CorF(n) thereof. That is, CorF(n) is determined by the divider 207 based on the following equation.

$$CorF(n) = Sum\ Store/RSSI\ Sum \qquad (1)$$

This determined value CorF(n) is supplied to a comparator 208, whereby it is compared with a threshold value TH which is obtained in a terminal 209 by being preset and stored inside the receiving apparatus. Here, when a maximum value of CorF(n) such that CorF(n) ≥ threshold value TH is detected, "H" data is output as frame synchronization output POFDM Cor OUT from the terminal 210. When CorF(n) < threshold value TH, "L" data is output from the terminal 210. The frame synchronization output obtained in this terminal 210 is supplied as a synchronization detection signal to a circuit (the DLL 11 in the case of this embodiment) in a subsequent stage.

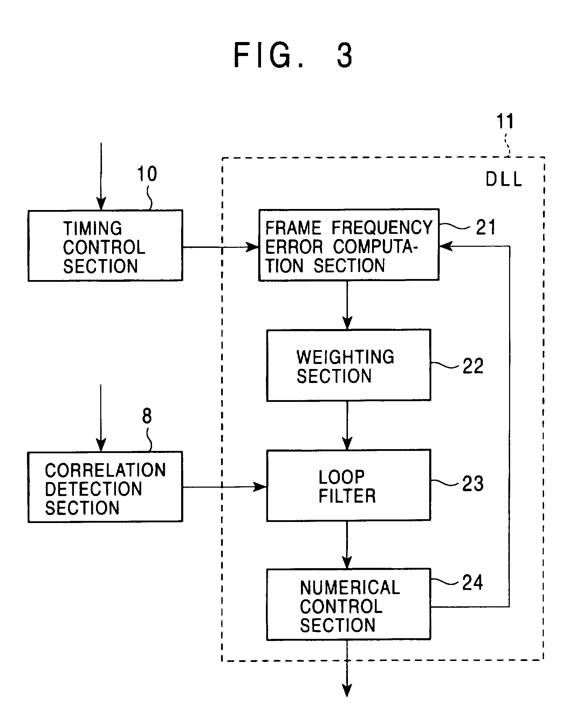

Fig. 3 is a block diagram showing the construction of the DLL 11.

A frame synchronization detection timing signal supplied from the timing control section 10 is input to a frame frequency error calculation section 21 of the DLL 11, whereby a phase difference with the internal timing signal generated by a numerical control section 24 is measured. A weighting section 22 performs weighting by multiplying the phase difference input from the numerical control section 24 by a predetermined coefficient. A loop filter 23 extracts lower-frequency components of the signal output from the weighting section 22 and outputs them to the numerical control section 24. The numerical control section 24 generates a pulse of a phase corresponding to the signal from the loop filter 23, supplies it to the frequency conversion section 3 of Fig. 1, and feeds it back to the frame frequency error calculation section 21.

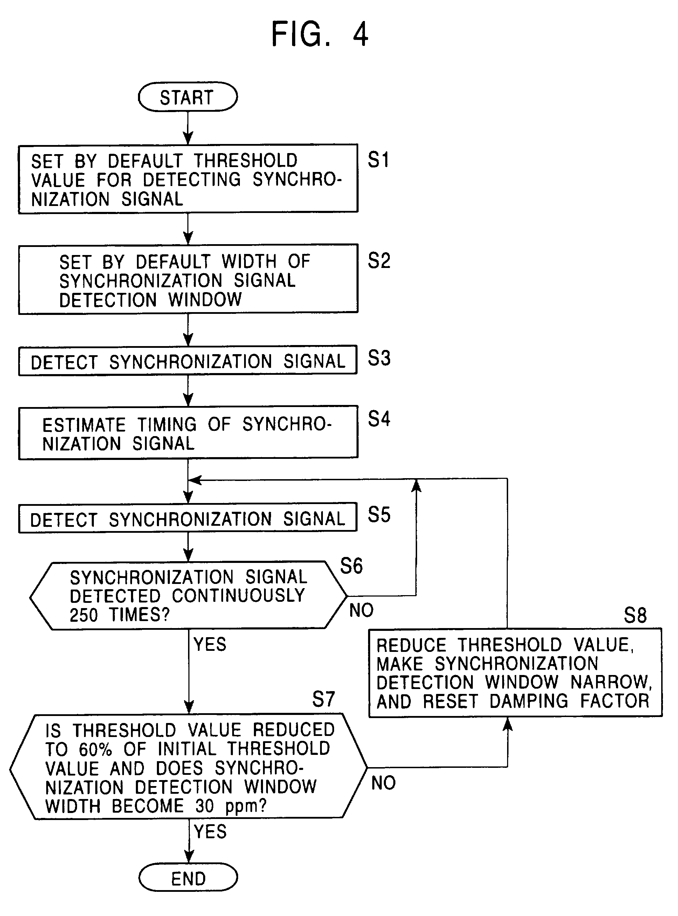

Next, referring to the flowchart in Fig. 4, the operation of the receiving apparatus of this embodiment is described.

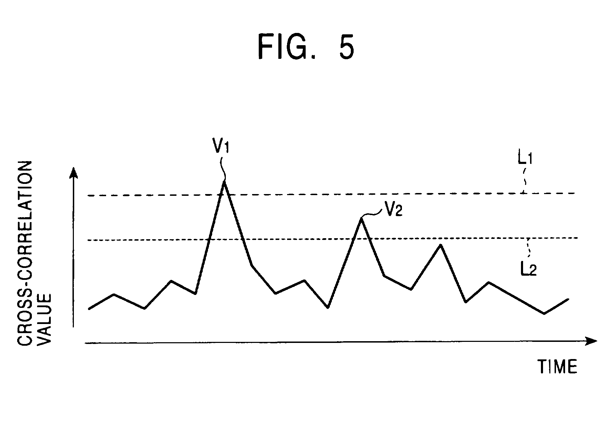

Initially, in step S1, the correlation detection section 8 sets a default value L1 as a threshold value for detecting a synchronization signal. This value L1 corresponds to a threshold value TH obtained in the terminal 209 of the frame correlation detector shown in Fig. 2. A received signal which is received by the antenna 1 and which is amplified by the low noise amplifier 2 is frequency-converted by the frequency conversion section 3 and is input to this correlation detection section 8. The correlation detection section 8 computes a cross-correlation value V between the input signal and the pattern of a prestored synchronization signal. This cross-correlation value V corresponds to the frame synchronization output obtained in the terminal 210 of the frame correlation detector shown in Fig. 2. The cross-correlation value V increases in the case of a timing at which a synchronization signal is contained in the input signal, and decreases when the synchronization signal is not contained. As a result, the cross-correlation value V computed by the correlation detection section 8 varies, for example, as shown in Fig. 5, with the elapse of time.

The synchronization signal is a unique signal, and a signal of a pattern which is the same as the synchronization signal does not exist in the data signal. A signal of a pattern resembling the synchronization signal exists in the data signal, and a cross-correlation value V2 of the signal with respect to the pattern of the synchronization signal decreases less than a cross-correlation value V1 when a true synchronization signal is contained in the data signal. Accordingly, in the correlation detection section 8, the cross-correlation value V is compared with a predetermined threshold value L. When the cross-correlation value V is greater than the threshold value L, a detection signal of the synchronization signal is output to the timer 9.

If the value of the threshold value L is increased, it is possible to detect the synchronization signal with higher accuracy. However, since the received signal is susceptible to the influence of noise, there are cases in which the synchronization signal in the received signal does not always coincide accurately with the pattern of the true synchronization signal. If the value of the threshold value L is increased too much, it becomes impossible to detect such a synchronization signal which is affected by the influence of noise.

If, in contrast, the value of the threshold value L is decreased too much, in a case where a data signal differing from the synchronization signal comes to have a pattern resembling the synchronization signal by noise, this will be detected erroneously as a synchronization signal.

In the initial stage of synchronization signal detection, if the value of the threshold value L is set to a low value, for example, such as a value L2 shown in Fig. 5, the cross-correlation value V2 of the timing which is not that of a true synchronization signal is detected erroneously as a synchronization signal, and it takes time for the DLL 11 to lock onto the synchronization signal. Therefore, the threshold value which is set as a default is set to a high value such as the value L1.

In step S2, the correlation detection section 8 determines whether or not a synchronization signal is detected continuously a predetermined number of times (for example, 250 times) and repeats detection of the synchronization signal until it is determined that the synchronization signal is detected continuously 250 times.

When the synchronization signal can be detected continuously 250 times, since the current threshold value L1 and the value of a synchronization signal detection window width $\tau1$ are values sufficient for the DLL 11 to lock onto the synchronization signal, the process proceeds to step S7 for further improving the synchronization retaining accuracy.

In step S7, the correlation detection section 8 determines whether or not the current threshold value L1 and the synchronization signal detection window width $\tau1$ are optimum values (for example, the threshold value L is 60% of the initial threshold value L1, and the synchronization signal detection window width $\tau$ is 30 ppm). The default value L1 of the threshold value L and the default value $\tau1$ of the synchronization signal detection window width $\tau$ are set to large values in advance in order to improve the initial synchronization detection accuracy. Therefore, in order to improve synchronization retaining accuracy, it is necessary to optimize the threshold value L and the value of the synchronization signal detection window width $\tau$.

When it is determined in step S7 that the current threshold value L and the synchronization signal detection window width $\tau$ are not optimum values, in step S8, the correlation detection section 8 decreases the value of the threshold value L to a smaller value, sets the value of the synchronization signal detection window width $\tau$ to be a smaller value, and sets the value of a damping factor for determining the response time of the loop filter 23 to a value at which convergence is achieved earlier. Thereafter, the process returns to step S5, and processing of step S5 and subsequent steps is repeated.

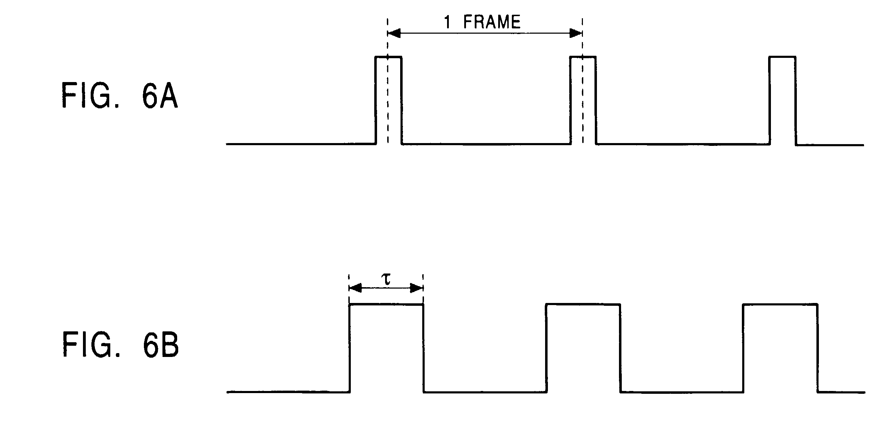

In order to maintain synchronization signal detection accuracy while improving synchronization retaining accuracy, the correlation detection section 8 decreases the value of the threshold value L in a gradual manner and narrows the synchronization signal detection window width in a gradual manner. The synchronization signal detection window width $\tau$ is narrowed by, for example, units of 30 ppm from 240 ppm which is the default value $\tau1$, and is eventually narrowed to 30 ppm which is the optimum value. The optimum value of the threshold value L is a value of 60% (0.6L1) of the default value L1, and the value is decreased until it eventually becomes the optimum value. When the threshold value L and the synchronization signal detection window width $\tau$ reach optimum values, the processing is terminated. Figs. 6A and 6B are diagrams showing an example of the relationship between a synchronization signal (Fig. 6A) which is transmitted at a frame frequency and a synchronization signal detection window width $\tau$ (Fig. 6B) which is set to detect the synchronization signal.

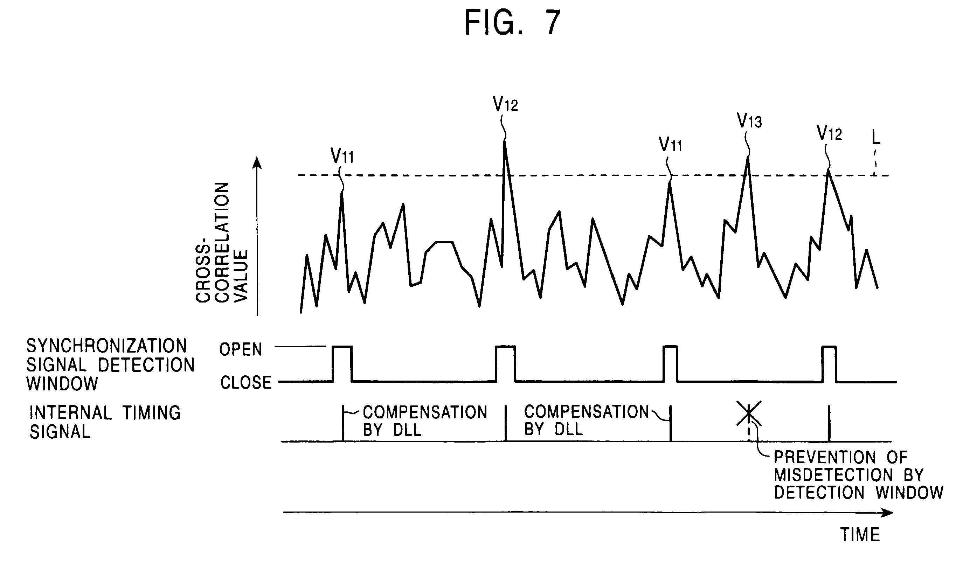

Fig. 7 shows the relationship between the cross-correlation value V computed by the correlation detection section 8 and the threshold value L, and the relationship between the open/close timing of the synchronization signal detection window and the compensation of the synchronization signal.

The correlation detection section 8 performs a process for detecting a synchronization signal only at the timing at which the synchronization signal detection window is open and therefore, can avoid a misdetection in such a case where the cross-correlation value V is a value V13 greater than the threshold value L. Furthermore, since the numerical control section 24 estimates the timing of the synchronization signal, also in a case where the cross-correlation value V is a value V11 smaller than the threshold value L, it is possible to compensate for a synchronization signal which would not be detected so as to generate an internal timing signal (synchronization signal).

The above-described series of processes can be performed by hardware, and in addition, can be performed by software. In a case where the series of processes are to be performed by software, the programs which are constituents of the software are installed in a computer incorporated into a signal receiving apparatus as dedicated hardware, or are installed in, for example, a general-purpose personal computer, capable of executing various functions as a result of installing various programs.

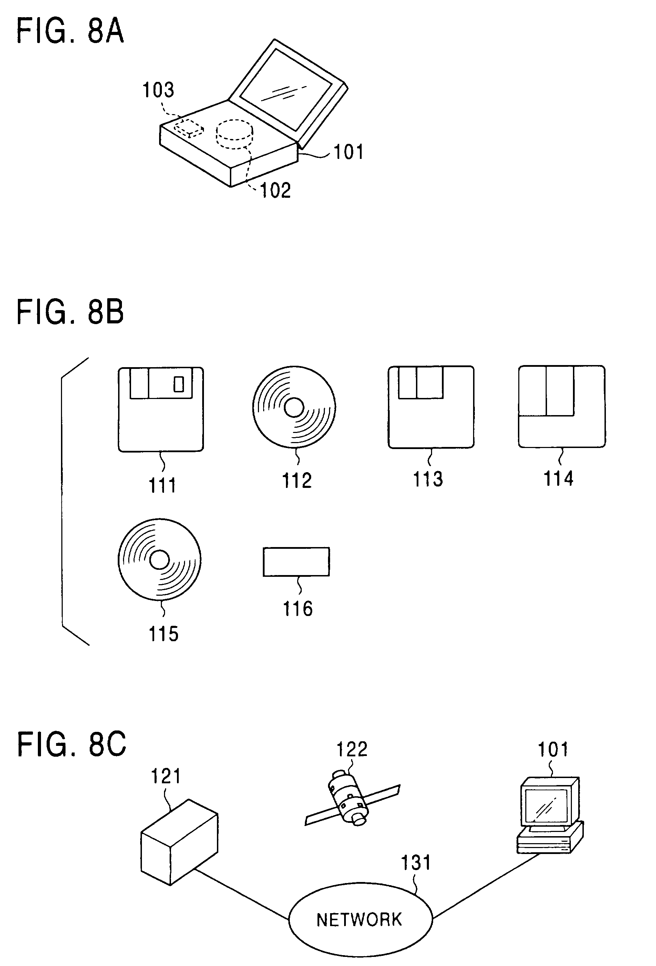

Next, referring to Fig. 8, a description is given of an example in which a medium is used to install a program for executing the above-described series of processes, and the program is installed in a computer so as to be executable by the computer, the computer being a general-purpose personal computer.

As shown in Fig. 8A, programs can be provided to a user in a state in which the programs are installed in advance in a hard disk 102 and a semiconductor memory 103 as recording media, contained in a personal computer 101. Alternatively, as shown in Fig. 8B, programs are temporarily or permanently stored in a recording medium, such as a floppy disk 111, a CD-ROM (Compact Disk-Read Only Memory) 112, a magnetooptical disk (MO disk) 113, a DVD (Digital Versatile Disc) 114, a magnetic disk 115, or a semiconductor memory 116, and can be provided as packaged software.

Furthermore, as shown in Fig. 8C, programs may be transferred in a wireless manner from a download site 121 to the personal computer 101 via a satellite 122 for digital satellite broadcasting, may be transferred via cable to the personal computer 101 via a network 131, such as a local area network or the Internet, and may be stored in a hard disk contained in the personal computer 101.

The word "medium" in this specification is used in a broad sense, including all these media.

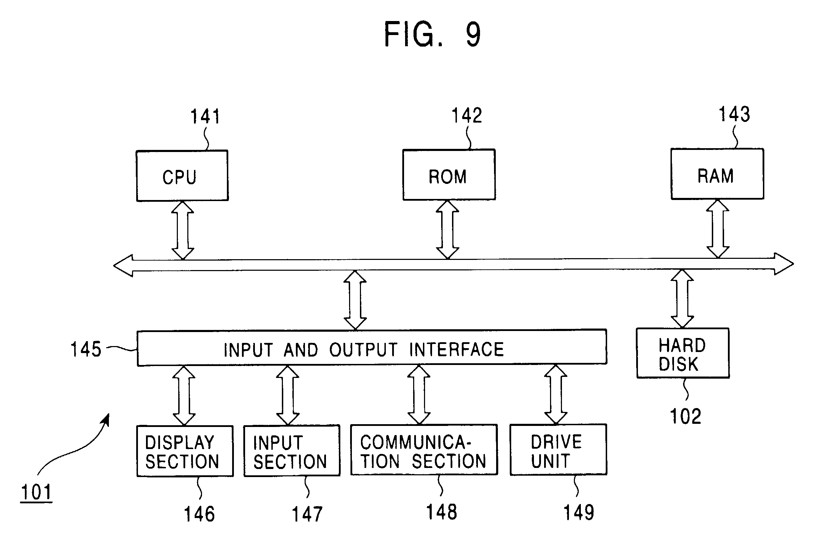

The personal computer 101 has contained therein a central processing unit (CPU) 141, for example, as shown in Fig. 9. An input and output interface 145 is connected to the CPU 141 through a bus 144. When a command is input from an input section 147, such as a keyboard, a mouse, etc., by a user through the input and output interface 145, in response to this, the CPU 141 executes a program stored in a ROM (Read Only Memory) 142 corresponding to the semiconductor memory 103 of Fig. 8A. Alternatively, the CPU 141 loads a program which is prestored in the hard disk 102, a program which is transferred from the satellite 122 or the network 131, is received by a communication section 148, and is installed in the hard disk 102, or a program which is read from the floppy disk 111, the CD-ROM 112, the MO disk 113, the DVD 114, or the magnetic disk 115, which is mounted to the drive unit 149, and which is installed in the hard disk 102 into a RAM (random access memory) 143, and executes the program. Furthermore, the CPU 141 outputs the processing result to a display section 146 having a liquid-crystal display panel, etc., via the input and output interface 145 as necessary.

Also, in this specification, steps in which programs provided from a medium are written contain not only a process performed in a time-series manner along the described sequence, but also a process performed in a parallel manner or individually, although it is not necessarily processed in a time-series manner.

In the above-described embodiment, as shown in Fig. 2, as the detection processing construction in the correlation detection section 8 of the synchronization signal transmitted as an OFDM signal, each of the real-number components of the received signal and the imaginary-number components thereof is compared with data prepared in advance inside the receiving apparatus and a correlation is detected. However, a correlation may be detected from only one of the components.

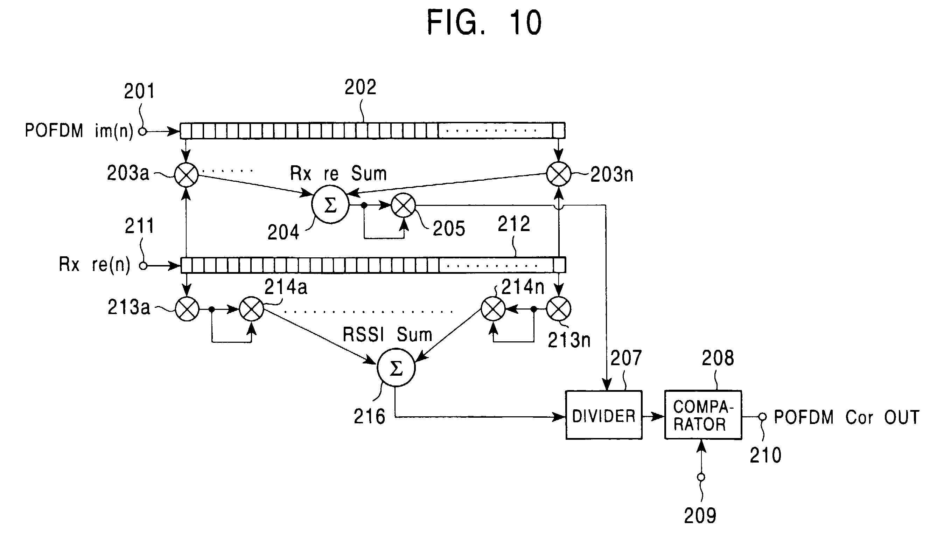

Fig. 10 is a diagram showing an example of a construction for detecting a frame correlation from only the correlation of the real-number component of the received signal in the correlation detection section 8. The real-number part of an OFDM code for frame synchronization detection, prepared in advance, which is obtained in the input terminal 201, is supplied to a shift register 202. Also, the real-number part of the received signal obtained in the input terminal 211 is supplied to the shift register 212. Then, the data which is set in each stage of both of the shift registers 202 and 212 is multiplied individually by multipliers 203a, 203b, ..., 203n, which are prepared for the number of stages of the shift registers, and the multiplied values of the respective multipliers 203a to 203n are integrated by the integrator 204, and the correlation value Rx re Sum of the real-number part is obtained. As a value such that the correlation value Rx re Sum of the real-number part is squared by the squaring circuit 205, a correlation value Sum Store of the received signal is obtained, and the correlation value is supplied to the divider 207.

Also, the received data of the real-number part, set in each stage of the shift register 212, is supplied to the squaring circuits 214a to 214n via the shift registers 213a to 213n. Then, the received data output from each of the squaring circuits 214a to 214n is supplied to the integrator 216 whereby the data is integrated to obtain received power RSSI Sum. The received power RSSI Sum obtained by this integrator 216 is supplied to the divider 207.

In the divider 207, the correlation value Sum Store of the received signal is divided by the received power RSSI Sum in order to obtain a solution CorF(n) thereof. The determined value CorF(n) is supplied to the comparator 208, whereby it is compared with the threshold value TH which is obtained in the terminal 209 by being set in advance and stored inside the terminal, and a frame synchronization output POFDM Cor OUT as a comparison result is supplied as a synchronization detection signal from the terminal 210 to a circuit (the DLL 11 in the case of this embodiment) at a subsequent stage.

As shown in Fig. 10, by forming a construction such that a frame correlation is detected from a process of only the real-number component, it is possible to easily detect a frame correlation in comparison with the construction of Fig. 2 which performs also a process on an imaginary-number component. However, for the frame correlation detection accuracy, detection on the basis of both the real-number component and the imaginary-number component of the received signal as shown in Fig. 2 makes it possible to detect a frame correlation with higher accuracy.

Although in the description thus far, as a synchronization signal contained in the received signal, a signal modulated by an OFDM method is detected and processed, also when the synchronization signal is a signal of another method, such as a signal in the interval of the synchronization signal, similarly, a frame correlation may be detected to perform a process. For example, in a case where the method of modulating a transmitted signal is an OFDM method, similarly, it is possible to detect a frame correlation and process it also in a case where, only the interval of the synchronization signal is not an OFDM signal, but is an M sequence (Maximum Length Code) code which is a PN code sequence which is set randomly in a pseudo manner.

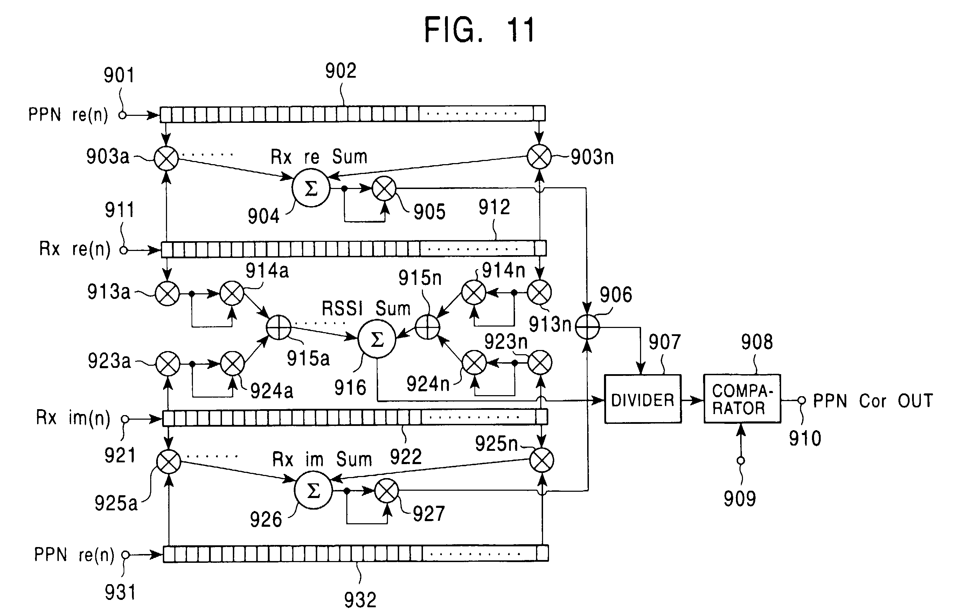

Fig. 11 shows an example of the construction of a frame correlator for detecting a synchronization signal (M sequence data) from the received signal when the synchronization signal is M sequence data. Inside the receiving apparatus, data (PN code) which is the same as the M sequence data which is transmitted is prepared in advance, and the real-number part of the prepared PN code for frame synchronization is supplied to a shift register 902 via an input terminal 901. Also, the real-number part of the received signal obtained in an input terminal 911 is supplied to a shift register 912. Then, the data which is set in each stage of both the shift registers 902 and 912 is individually multiplied by multipliers 903a, 903b, ..., 903n, which are prepared for the number of stages, the multiplied values of the respective multipliers 903a to 903n are integrated by an integrator 904, and a correlation value Rx re Sum of the real-number part is obtained. A squared value such that the correlation value Rx re Sum of the real-number part is squared by a squaring circuit 905 is supplied to an adder 906.

Also, the imaginary-number part of the PN code for frame synchronization, which is prepared in advance inside the receiving apparatus, is supplied to a shift register 932 via an input terminal 931. Also, the imaginary-number part of the received signal obtained in an input terminal 921 is supplied to a shift register 922. Then, the data which is set in each stage of both the shift registers 922 and 932 is individually multiplied by multipliers 925a, 925b, ..., 925n, which are prepared for the number of the shift registers, the multiplied values of the respective multipliers 925a to 925n are integrated by an integrator 926, yielding a correlation value Rx im Sum of the imaginary-number part. A squared value such that the correlation value Rx im Sum of the imaginary-number part is squared by a squaring circuit 927 is supplied to the adder 906.

In the adder 906, the correlation value of the supplied real-number part and the correlation value of the supplied imaginary-number part are added together to obtain a correlation value Sum Store of the received signal. The correlation value Sum Store obtained by this adder 906 is supplied to the divider 907.

Also, the received data of the real-number part, which is set in each stage of the shift register 912, is supplied to adders 915a to 915n via the multipliers 913a to 913n and the squaring circuits 914a to 914n, the received data of the imaginary-number part, which is set in each stage of the shift register 922, is supplied to the adders 915a to 915n via multipliers 923a to 923n and squaring circuits 924a to 924n, so that the received data of the real-number part and the received data of the imaginary-number part are added together. Then, the received data added by each of the adders 915a to 915n is supplied to the integrator 916 whereby the data is integrated to obtain received power RSSI Sum. The received power RSSI Sum obtained by this integrator 916 is supplied to the divider 907.

In the divider 907, the correlation value Sum Store of the received signal is divided by the received power RSSI Sum to obtain a solution Cor1(n) thereof. An equation for obtaining this solution Cor1(n) is a computation of the equation (1), which has already been described.

Then, the determined value Cor1(n) is supplied to the comparator 908, whereby it is compared with the threshold value TH which is obtained in the terminal 909 by being set in advance and stored inside the receiving apparatus. Here, when a maximum value of Cor1(n) such that Cor1(n) ≥ threshold value TH is detected, "H" data is output, as frame synchronization output PPN Cor OUT, from a terminal 910. When Cor1(n) < threshold value TH, "L" data is output from the terminal 910. This frame synchronization output PPN Cor OUT is supplied as a synchronization detection signal to a circuit (the DLL 11 in the case of this embodiment) at a subsequent stage.

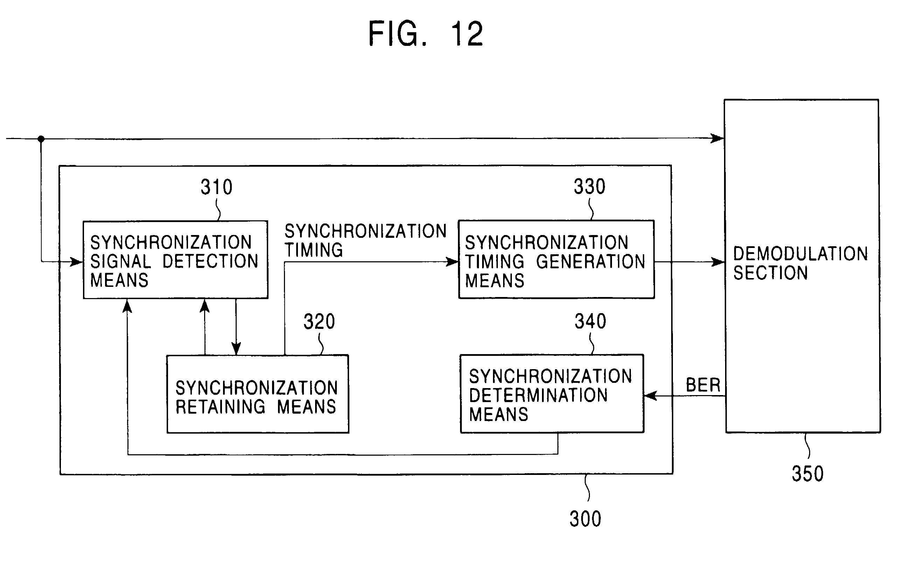

A second embodiment of the present invention will now be described with reference to Figs. 12 to 18.

Fig. 12 is a block diagram of a receiving apparatus according to the second embodiment. The receiving apparatus in this embodiment is a receiving apparatus for receiving a transmission signal employing an OFDM (Orthogonal Frequency Division Multiplex) method. Also, for the modulation method of a signal (OFDM segment) to be received, for example, a DQPSK (Differential Quadrature Phase Shift Keying) method is used. Also, a synchronization signal having a specific pattern is contained at a frame frequency in the signal transmitted by this OFDM method.

Fig. 12 is a block diagram of an example of the construction of a synchronization processing section of the receiving apparatus of this embodiment. This receiving apparatus comprises a synchronization processing section 300 for performing synchronization detection and synchronization retention and a demodulation section 350 for performing demodulation in order to generate demodulation result information.

The synchronization processing section 300 detects a synchronization signal from the received signal, generates a synchronization timing and a demodulation timing, and performs a synchronization retaining process. The synchronization processing section 300 comprises synchronization signal detection means 310 for detecting a synchronization signal from the received signal, synchronization retaining means 320 for retaining the detected synchronization and generating a retaining timing, demodulation timing generation means 330 for generating a demodulation timing, and synchronization determination means 340 for determining whether or not the synchronization timing is correct.

The synchronization signal detection means 310 comprises a synchronization signal detection window (hereinafter referred to as a "window") of a predetermined duration. This window opens in accordance with an estimated synchronization timing generated by the synchronization retaining means 320, detection of a synchronization signal is performed while the window is open. Also, during start-up or when it is detected that the synchronization timing is in error, by increasing the window width to be infinite, or by ignoring the window width, initial synchronization detection is performed so as to acquire synchronization.

The synchronization retaining means 320 performs a process for retaining the synchronization obtained by the synchronization signal detection means 310 and generates a synchronization timing, an example thereof being a delay lock loop (hereinafter referred to as a "DDL"), etc. The synchronization retaining means 320 performs estimation of the next synchronization timing based on the periodicity of the synchronization signal. Also, the synchronization retaining means 320 detects a synchronization timing error thereof and performs correction thereon. Hereinafter, a synchronization timing estimated by the synchronization retaining means 320 is an estimated synchronization timing. The estimated synchronization timing of the synchronization retaining means 320 is output to the demodulation timing generation means 330.

The demodulation timing generation means 330 generates a demodulation timing based on the synchronization timing and outputs it to the demodulation section 350. The synchronization determination means 340 determines whether or not the synchronization timing is correct according to the demodulation error result input from the demodulation section 350, and performs a predetermined process according to the determination result. For example, when the demodulation error value is smaller than a particular reference value and it continues for a fixed period of time, the synchronization timing is determined to be normal. When the demodulation error value exceeds a particular reference value and it continues for a fixed period of time, the synchronization timing is determined to be in error. When the synchronization timing is determined to be normal in this manner, the setting time of the window for detecting a synchronization signal is decreased. Also, when the synchronization timing is determined to be in error, the synchronization signal detection means 310 acquires initial synchronization.

The demodulation section 350 performs a demodulation at a timing based on the demodulation timing signal generated by the synchronization processing section 300, and calculates an error rate thereof, for example, a bit error rate (hereinafter referred to as a "BER (bit error rate)"). The calculated BER is sent to the synchronization determination means 340 of the synchronization processing section 300.

As a construction for detecting a synchronization signal inside the synchronization signal detection means 310, for example, a frame correlator which has already been described in the first embodiment can be applied. That is, in a case where the synchronization signal is to be transmitted as an OFDM signal modulated by the OFDM method, a construction (an example in which detection is performed based on both of the real-number component and the imaginary-number component) shown in Fig. 2, or a construction (an example in which detection is performed based on only the real-number component) shown in Fig. 10, which have already been described, can be applied. Also, in a case where only the interval of the synchronization signal is transmitted as specific data (for example, M sequence data) which is not modulated by the OFDM method, a construction shown in Fig. 11, which has already been described, can be applied.

Next, a description is given of the operation of the receiving apparatus of this embodiment. When the apparatus is activated, an initial synchronization acquiring process is performed by the synchronization signal detection means 310. At this time, the window width is increased to be infinite or is ignored, and a synchronization signal detection process is performed until an initial synchronization is acquired. When the synchronization signal is detected, the synchronization detection signal is sent to the synchronization retaining means 320, whereby the window width is set to an initial value. The synchronization retaining means 320 performs pull-in of the acquired synchronization timing. By using the periodicity of the synchronization signal, an estimated synchronization timing of the next timing is generated. At the estimated synchronization timing, a window of a predetermined width is opened, a synchronization signal is detected by the synchronization signal detection means 310, and the signal is input to the synchronization retaining means 320. Based on this, correction of a synchronization timing error is performed. The generated synchronization timing is output to the demodulation timing generation means 330. The demodulation timing generation means 330 generates a demodulation timing and outputs it to the demodulation section 350.

The demodulation section 350 performs a demodulation in accordance with a demodulation timing, calculates an BER (bit error rate), which is a data error rate, and sends it to the synchronization determination means 340. The synchronization determination means 340 determines whether or not the synchronization timing is correct on the basis of the BER. When it is determined that the synchronization timing is correct continuously for a predetermined period of time, the window width is decreased, that is, the setting time in which the window is open is decreased. When it is determined that the synchronization timing is erroneous, the synchronization retaining process of the synchronization retaining means 320 is stopped, and setting is performed so that an operation starting from initial synchronization acquisition of the synchronization signal detection means 310 is performed.

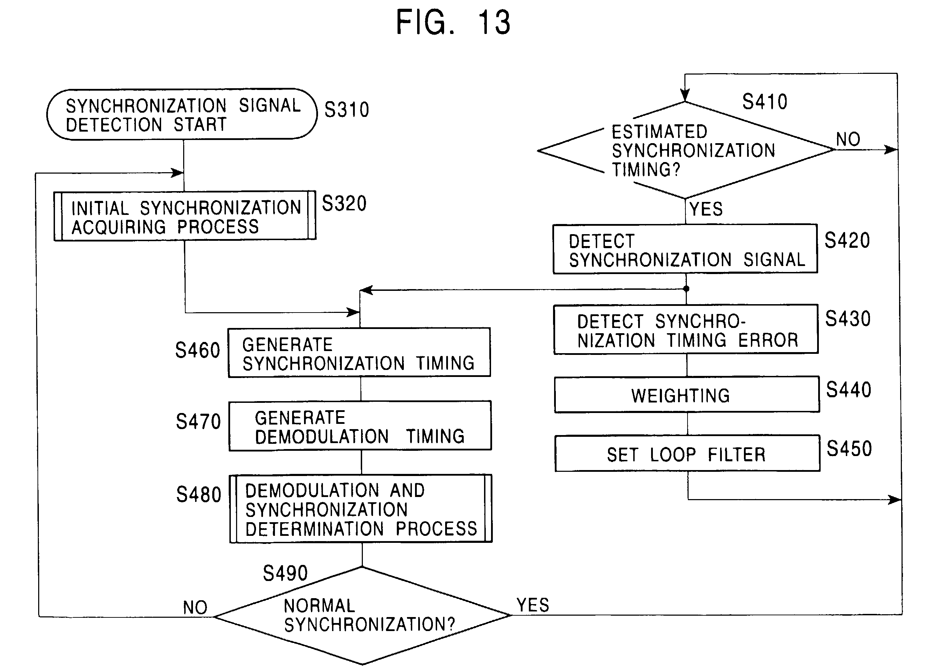

In addition, a synchronization retaining method for use with the receiving apparatus of this embodiment will now be described in detail. Fig. 13 is a flowchart showing a synchronization retaining step of the receiving apparatus of this embodiment. When synchronization signal detection is started (step S310), initially, an initial synchronization acquiring process is performed (step S320). The initial synchronization acquiring process is performed until a synchronization signal is detected, a synchronization timing is generated based on the detected initial synchronization signal (step S460), and synchronization retention is performed. Then, a demodulation timing is generated from the synchronization timing (step S470). In accordance with the demodulation timing, a demodulation process, and a synchronization determination process according to an error rate during the demodulation, are performed (step S480).

Thereafter, in a case where the synchronization determination result is checked (step S490) and the synchronization timing is determined to be erroneous, the retained synchronization timing is discarded, and a process starting from the initial synchronization acquiring process (step S320) is performed. When the synchronization timing is determined to be correct, the retained synchronization timing is continued. When the retained synchronization timing is continued, it is checked whether or not an estimated synchronization timing, which is the next synchronization timing calculated from the retained synchronization timing (step S410), is reached. When it is reached, the process S410 is repeated again. When the estimated synchronization timing is reached, a window of a predetermined width is opened, and a synchronization signal is detected (step S420). Based on the detected synchronization signal, synchronization timing error detection is performed (step S430), weighting is performed according to the error (step S440), and the loop filter is set (step S450).

Adjustment of the synchronization timing is performed in this manner, and the process waits for the next estimated synchronization timing again. At the same time, a synchronization timing is generated from the detected synchronization signal (step S460), and synchronization retention is performed. Then, a demodulation timing is generated from the synchronization timing (step S470). In accordance with the demodulation timing, a demodulation process and a synchronization determination process according to an error rate during the demodulation are performed (step S480). The synchronization determination result is checked (step S490). In a case where the demodulation timing is determined to be erroneous, the retained synchronization timing is discarded, and a process starting from the initial synchronization acquiring process (step S320) is performed. In a case where the synchronization timing is determined to be correct, the retained synchronization timing is continued, and the process waits for the next estimated synchronization timing.

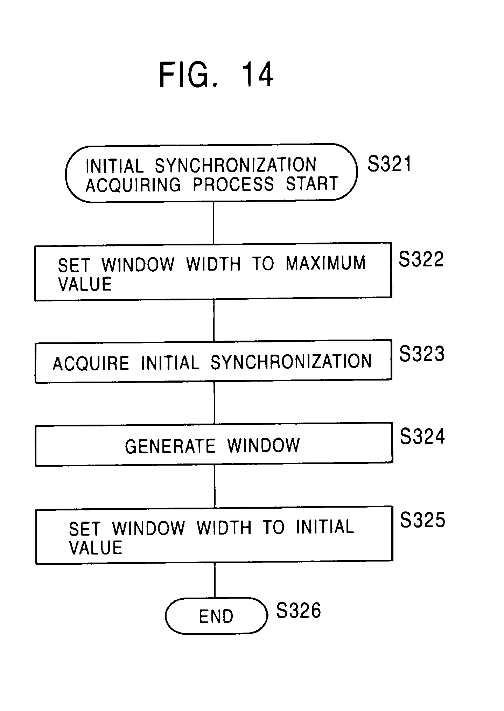

Next, an initial synchronization acquiring process is described in detail. Fig. 14 is a flowchart of an initial synchronization acquiring step of the receiving apparatus according to this embodiment. When an initial synchronization acquiring process starts (step S321), the window width is set to a maximum value (step S322). Alternatively, the window width may be ignored or may be set to be infinite. When the synchronization signal is detected and initial synchronization is acquired (step S323), the window is set (step S324), the window width is set to an initial value (step S325), terminating the processing (step S326).

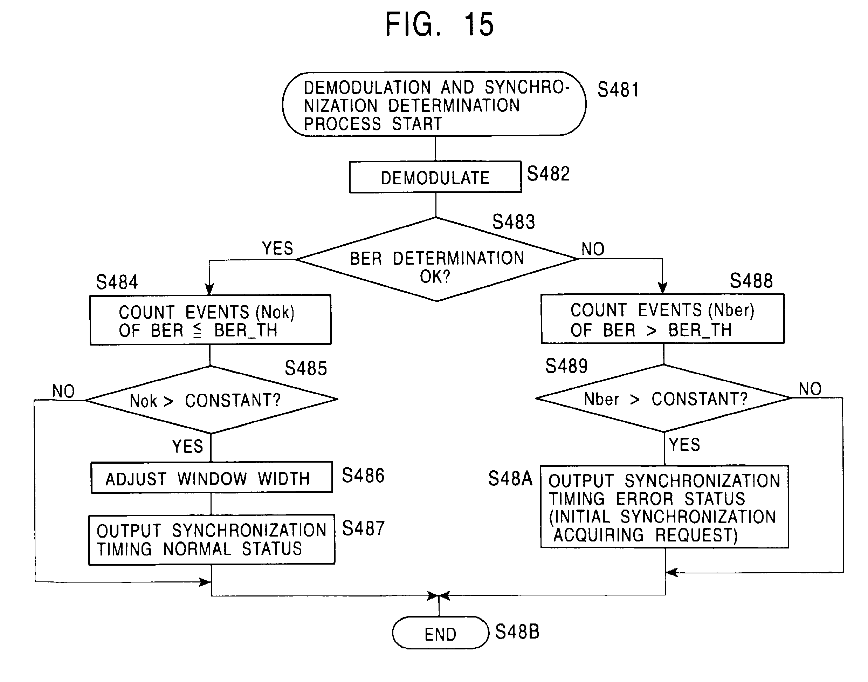

Next, demodulation and synchronization determination processes are described in detail. Fig. 15 is a flowchart of demodulation and synchronization determination steps of the receiving apparatus of this embodiment. When the demodulation and synchronization determination processes start at a demodulation timing (step S481), a demodulation is performed, and a data error rate (BER) during the demodulation is calculated (step S482). It is determined whether or not the calculated BER exceeds a preset reference value (hereinafter referred to as a "BER_TH") (step S483).

When the BER is equal to or smaller than the BER_TH, a counter (hereinafter referred to as a "Nok"), which counts an event in which the BER is smaller than the BER_TH, is incremented as in the following equation, wherein k is an arbitrary integer indicating a cycle:

$$Nok[k] = Nok[k - 1] + 1 \qquad (2)$$

Also, a counter (hereinafter referred to as a "Nber") which counts an event in which the BER exceeds a reference value is decremented as in the following equation:

$$Nber[k] = Nok[k - 1] - 1 \qquad (3)$$

Then, it is checked whether or not the Nok exceeds a predetermined number (hereinafter referred to as "Nwin") indicating window width adjustment synchronization for determining that the synchronization timing is correct and for adjusting the window width (step S485). When the Nok does not exceed the predetermined number, the processing is terminated (step S48B). When the Nok exceeds the Nwin, that is, when it is determined that the synchronization timing is normal continuously for the window width adjustment period, the window width is adjusted (step S486), and the window width is decreased. Then, a synchronization timing normal status is output (step S487), terminating the processing (step S48B).

When the BER exceeds the BER_TH, the Nber is incremented as in the following equation:

$$Nber[k] = Nok[k - 1] + 1 \qquad (4)$$

Also, the Nok is cleared as in the following equation:

$$Nok = 0 \qquad (5)$$

Then, it is checked (step S488) whether or not the Nber exceeds a predetermined number (hereinafter referred to as "Nber_TF") at which it is determined that the synchronization timing error continues and there is a need to newly acquire a synchronization timing. When the Nber does not exceed the predetermined number, the processing is terminated (step S48B). When the Nber exceeds the Nber_TF, that is, when it is determined that synchronization timing errors have occurred a predetermined number of times, an initial synchronization acquisition request is made. In this case, a synchronization timing error status is output (step S48A), and the processing is terminated (step S48B). As a result, in the subsequent process, a process for detecting a new initial synchronization signal is performed.

As in the above description, by estimating, by a DDL, etc., the next synchronization timing on the basis of the feedback information of a synchronization signal, a fixed degree of synchronization detection accuracy is compensated for. Furthermore, for example, in a case where hits, etc., occur frequently and the demodulation result is degraded, based on the feedback information of the demodulation result, it is possible to temporarily return to the initial synchronization acquired state and to accurately detect a synchronization timing again.

Next, the operation of the receiving apparatus of this embodiment and a specific example of a synchronization retaining method thereof are described with reference to a synchronization detected state diagram.

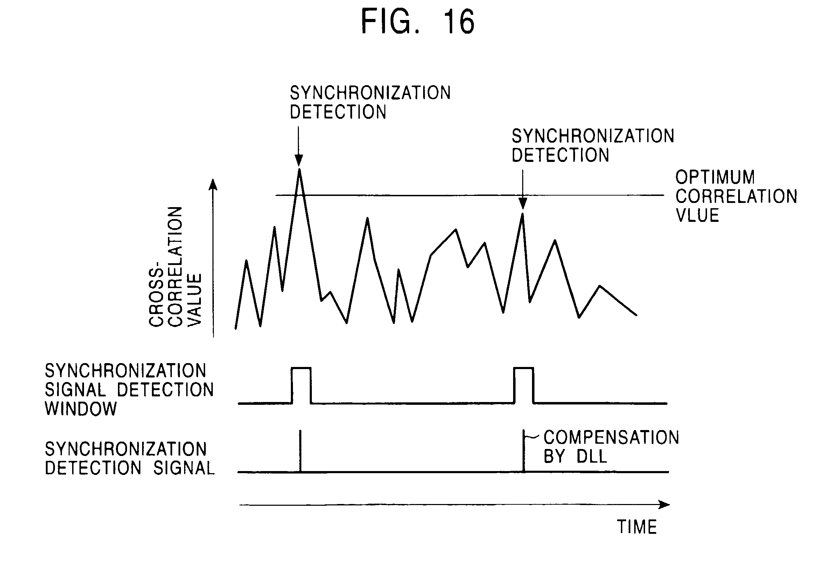

The compensation of a synchronization signal is described first. Fig. 16 is a synchronization detected state diagram when a synchronization signal of the receiving apparatus of this example is compensated for. Normally, when a cross-correlation value exceeds an optimum threshold value, it is determined that a synchronization signal is detected. A window is opened in accordance with an estimated synchronization timing of the synchronization retaining means (for example, a DLL). At this time, in a case where the cross-correlation value exceeds an optimum correlation value, it is determined that a synchronization signal is detected. Also, even if the cross-correlation value falls below the optimum correlation value, it is assumed that a synchronization signal is detected by the compensation by the DLL, and the processing is continued. In this manner, even if the synchronization signal falls below the optimum correlation value, processing can be performed at a predetermined cycle. Of course, since the BER during the demodulation is ignored, when the synchronization signal is in error, this can be detected.

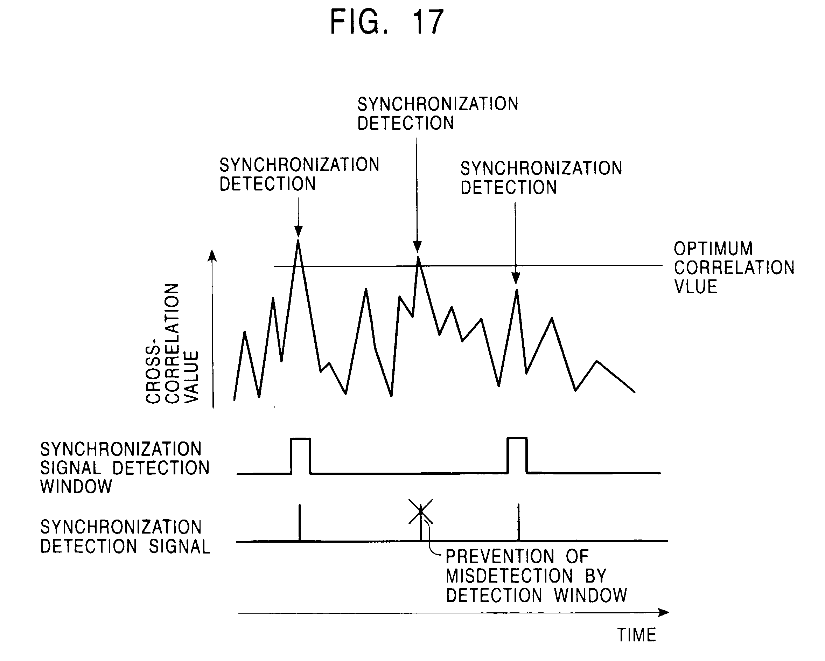

Next, prevention of a misdetection by using a window is described. Fig. 17 is a synchronization detected state diagram of synchronization signal misdetection prevention, of the receiving apparatus of this embodiment. A cross-correlation value is assumed to exceed an optimum correlation value at places which are not for an original synchronization signal. In the communication apparatus according to the present invention, since synchronization signal detection is performed in accordance with an estimated synchronization timing calculated by a DLL, a frame is not detected which exceeds an optimum correlation value which appears at a place where a synchronization signal does not occur. In this manner, a detection window makes it possible to prevent a misdetection of a synchronization signal.

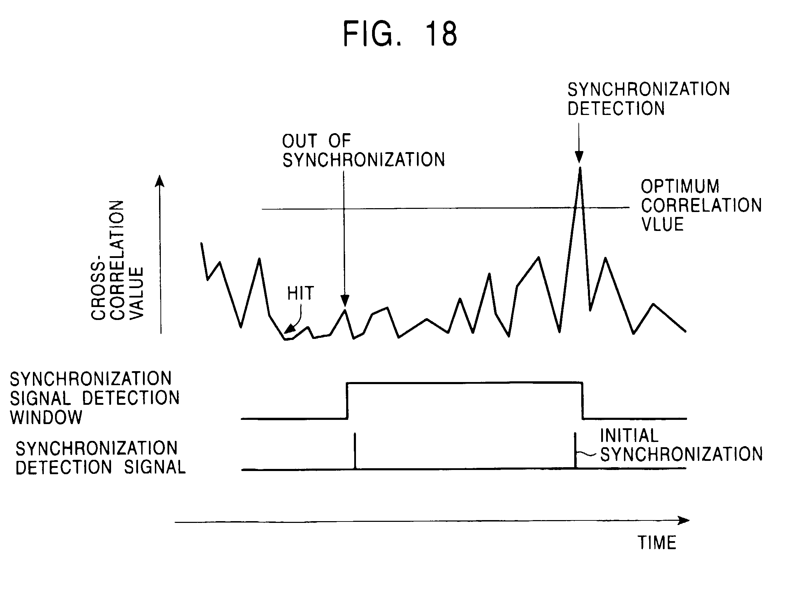

Next, a case in which loss of synchronization occurs due to a hit is described. Fig. 18 is a synchronization detected state diagram when a synchronization signal is in error, of the receiving apparatus of this embodiment. A hit occurs, causing a lag to occur between the synchronization timing of the apparatus of the other party and the synchronization timing of the subject apparatus. At this time, if demodulation is performed based on a synchronization signal detected inside the estimated synchronization timing window calculated by the DLL, a BER, which is a demodulation result thereof, becomes worse. For this reason, it is determined that the synchronization is in error, the window is enlarged to the maximum value, and an initial synchronization is acquired. When the initial synchronization is acquired, the synchronization timings coincide, and the demodulation result becomes satisfactory.

As described above, in order to determine that the synchronization timing detected inside the estimated synchronization timing window by the synchronization retaining means is not a normal synchronization timing, the value of the BER, which is information of the demodulation result, is used for determination. When the demodulation result is satisfactory, the synchronization timing, detected inside the estimated synchronization timing window, from the synchronization retaining means is handled as a normal synchronization timing. When the demodulation result is worse than a fixed value continuously a predetermined number of times, assuming that the estimated synchronization timing from the synchronization retaining means is in error, a process is performed starting from the step of initial synchronization detection again, detection of a normal synchronization timing is performed, and correction of the synchronization timing is performed.

The above-described processing functions can be realized by a computer. In such a case, the processing contents of functions to be possessed by a communication apparatus are described in a program recorded in a computer-readable recording medium. Then, the above-described processing can be realized by a computer by executing this program by the computer. Examples of computer-readable recording media include a magnetic recording apparatus, a semiconductor memory, etc. When these are to be retailed, the following can be performed, for example, a program may be stored in a transportable recording medium, such as a CD-ROM (Compact Disk-Read Only Memory) or a floppy disk, and be distributed, or a program may be stored in a storage apparatus of a computer connected to a network and may be transferred to another computer through the network. When a program is executed by a computer, the program is stored in advance in a hard disk, etc., inside the computer, and is loaded into main memory, and then is executed.

According to the receiving apparatus of the present invention, since a threshold value and the width of a window, for detecting a synchronization signal to be transmitted, are controlled until they reach optimum values in accordance with the detection result of the synchronization signal, it is possible to detect the synchronization signal quickly and reliably at the time of initial synchronization, and it is possible to improve synchronization retaining accuracy.

In addition, according to the receiving apparatus of the present invention, when a synchronization signal contained in a received signal is detected, a synchronization timing is generated from the detected synchronization signal and synchronization retention is performed. Demodulation of data is performed at a demodulation timing based on this synchronization timing, and an error rate during the demodulation is calculated. It is determined whether or not the synchronization timing is correct on the basis of the error rate during the demodulation. When it is determined that the synchronization timing is not correct, a synchronization timing correction process is performed. In this manner, in the present invention, since a synchronization timing correction process is performed in accordance with the demodulation result, even if, for example, a hit or the like occurs, it is possible to make corrections for accurate synchronization retention. As a result, it is possible to perform synchronization retention with higher accuracy.

Many different embodiments of the present invention may be constructed without departing from the spirit and scope of the present invention. It should be understood that the present invention is not limited to the specific embodiments described in this specification. To the contrary, the present invention is intended to cover various modifications and equivalent arrangements included within the spirit and scope of the invention as hereafter claimed. The scope of the following claims is to be accorded the broadest interpretation so as to encompass all such modifications, equivalent structures and functions.

### Claims

1. A receiving apparatus comprising:

    threshold-value setting means for setting a threshold value for detecting a synchronization signal contained in a transmission signal to a default value;
    window-width setting means for setting the width of a window for detecting said synchronization signal to a default value;
    detection means for detecting the detected state of said synchronization signal; and
    control means for performing control so that the default threshold value set by said threshold-value setting means and the default value of the window width set by said window-width setting means reach optimum values in accordance with the detection result of said detection means.

2. A receiving apparatus according to claim 1, wherein the synchronization signal contained in said transmission signal is a signal modulated by an OFDM (Orthogonal Frequency Division Multiplex) method.

3. A receiving apparatus according to claim 1 or 2, wherein the synchronization signal contained in said transmission signal is an M sequence signal.

4. A receiving apparatus according to any one of the preceding claims, wherein said control means controls said threshold value and said window width when the synchronization signal contained in said transmission signal is detected continuously a predetermined number of times.

5. A receiving apparatus having a function for detecting a synchronization signal contained at a predetermined cycle in a transmission signal and for retaining the synchronization signal, said receiving apparatus comprising:

synchronization signal detection means for detecting a synchronization signal from a received signal when a synchronization signal detection window of a predetermined duration for detecting a synchronization signal is open;
synchronization retaining means for retaining the synchronization acquired by said synchronization signal detection means and for generating a synchronization timing;
demodulation timing generation means for generating a demodulation timing at which demodulation is performed from said synchronization timing;
demodulation means for demodulating data at said demodulation timing and for calculating an error rate representing whether or not demodulation has been performed normally; and
synchronization determination means for determining whether or not said synchronization timing is correct on the basis of said error rate and for correcting the synchronization timing in accordance with the determination result.

6. A receiving apparatus according to claim 5, wherein said synchronization signal contained in said transmission signal is a signal modulated by an OFDM method.

7. A receiving apparatus according to claim 6, wherein said synchronization detection means detects a synchronization signal on the basis of only one of a real-number component and an imaginary-number component of the received signal of the OFDM method.

8. A receiving apparatus according to any one of claims 5 to 7, wherein the synchronization signal contained in said transmission signal is an M sequence signal.

9. A receiving apparatus according to any one of claims 5 to 8, wherein said synchronization signal detection means detects a synchronization signal by increasing said synchronization signal detection window width to a maximum value or by ignoring said synchronization signal detection window at the time of an initial synchronization acquisition for which a synchronization is detected newly.

10. A receiving apparatus according to any one of claims 5 to 9, wherein said synchronization retaining means estimates the next synchronization timing from the acquired synchronization signal, generates an estimated synchronization timing, and detects and adjusts an error of the synchronization timing.

11. A receiving apparatus according to any one of claims 5 to 10, wherein said demodulation means calculates a bit error rate at the time of demodulation.

12. A receiving apparatus according to any one of claims 5 to 11, wherein said synchronization determination means determines that the synchronization timing is erroneous when said error rate exceeds a predetermined value for a predetermined period of time, and causes the apparatus to proceed to an initial synchronization acquiring operation.

13. A receiving apparatus according to any one of claims 5 to 12, wherein said synchronization determination means further determines that the synchronization timing is normal when said error rate falls below a predetermined value for a predetermined period of time, and decreases said synchronization signal detection window width.

14. A receiving method comprising the steps of:

setting a threshold value for detecting a synchronization signal contained in a transmission signal to a default value;
setting the width of a window for detecting said synchronization signal to a default value;
detecting the detected state of said synchronization signal; and
performing control so that said default threshold value and said default value of the window width reach optimum values in accordance with the detection result of said synchronization signal.

15. A receiving method for detecting a synchronization signal contained at a predetermined cycle in a transmission signal and for retaining the synchronization signal, said receiving method comprising the steps of:

detecting a synchronization signal from the received signal and acquiring an initial synchronization;

generating a periodic estimated synchronization timing from said acquired initial synchronization;

detecting a synchronization signal at said periodic estimated synchronization timing;

correcting the error of the estimated synchronization timing in accordance with said detected synchronization timing;

generating a demodulation timing at said synchronization timing;

performing demodulation at said demodulation timing and calculating the error rate during the demodulation;

determining whether or not said estimated synchronization timing is a normal timing on the basis of said error rate; and

performing a step for acquiring said initial synchronization when said determination is an estimated synchronization timing error and, when it is otherwise, repeating a step for generating said periodic estimated synchronization timing and subsequent steps.

16. A receiving method according to claim 14 or 15, wherein the synchronization signal contained in said transmission signal is a signal modulated by an OFDM method.

17. A receiving method according to claim 16, wherein detection of a synchronization signal from said received signal of the OFDM method is performed on the basis of only one of a real-number component and an imaginary-number component of the received signal of the OFDM method.

18. A receiving method according to any one of claims 14 to 17, wherein the synchronization signal contained in said transmission signal is an M sequence signal.

19. A computer program which is capable, when executed on a processing means of causing the processing means to perform a method according to any one of claims 14 to 18.

20. A storage medium storing a computer program according to claim 19.

# FIG. 1

EP 1 058 434 A2

# FIG. 2

EP 1 058 434 A2

# FIG. 3

TIMING CONTROL SECTION — 10

CORRELATION DETECTION SECTION — 8

DLL — 11

FRAME FREQUENCY ERROR COMPUTATION SECTION — 21

WEIGHTING SECTION — 22

LOOP FILTER — 23

NUMERICAL CONTROL SECTION — 24

EP 1 058 434 A2

# FIG. 4

START

S1 — SET BY DEFAULT THRESHOLD VALUE FOR DETECTING SYNCHRONIZATION SIGNAL

S2 — SET BY DEFAULT WIDTH OF SYNCHRONIZATION SIGNAL DETECTION WINDOW

S3 — DETECT SYNCHRONIZATION SIGNAL

S4 — ESTIMATE TIMING OF SYNCHRONIZATION SIGNAL

S5 — DETECT SYNCHRONIZATION SIGNAL

S6 — SYNCHRONIZATION SIGNAL DETECTED CONTINUOUSLY 250 TIMES?
NO

S8 — REDUCE THRESHOLD VALUE, MAKE SYNCHRONIZATION DETECTION WINDOW NARROW, AND RESET DAMPING FACTOR

YES

S7 — IS THRESHOLD VALUE REDUCED TO 60% OF INITIAL THRESHOLD VALUE AND DOES SYNCHRONIZATION DETECTION WINDOW WIDTH BECOME 30 ppm?
NO

YES

END

# FIG. 5

FIG. 6A

1 FRAME

FIG. 6B

τ

FIG. 7

CROSS-CORRELATION VALUE

OPEN

CLOSE

$V_{11}$

$V_{12}$

$V_{11}$

$V_{13}$

$V_{12}$

L

SYNCHRONIZATION SIGNAL DETECTION WINDOW

INTERNAL TIMING SIGNAL

COMPENSATION BY DLL

COMPENSATION BY DLL

PREVENTION OF MISDETECTION BY DETECTION WINDOW

TIME

# FIG. 8A

103

101

102

# FIG. 8B

111

112

113

114

115

116

# FIG. 8C

121

122

101

131

NETWORK

# FIG. 9

EP 1 058 434 A2

# FIG. 10

FIG. 11

PPN re(n) 901
902
903a
903n
905
904
912
Rx re Sum

Rx re(n) 911
913a
914a
914n
915n
915a
916
RSSI Sum
923a
924a
924n
923n
913n
906
907
DIVIDER

Rx im(n) 921
922
925a
925n
926
927
Rx im Sum

PPN re(n) 931
932

908
COMPA-RATOR
909
910
PPN Cor OUT

# FIG. 12

SYNCHRONIZATION SIGNAL DETECTION MEANS (310)

SYNCHRONIZATION TIMING

SYNCHRONIZATION TIMING GENERATION MEANS (330)

SYNCHRONIZATION RETAINING MEANS (320)

SYNCHRONIZATION DETERMINATION MEANS (340)

DEMODULATION SECTION (350)

BER

300

EP 1 058 434 A2

# FIG. 13

SYNCHRONIZATION SIGNAL DETECTION START — S310

INITIAL SYNCHRONIZATION ACQUIRING PROCESS — S320

S410 — ESTIMATED SYNCHRONIZATION TIMING? — NO / YES

S420 — DETECT SYNCHRONIZATION SIGNAL

S430 — DETECT SYNCHRO-NIZATION TIMING ERROR

S440 — WEIGHTING

S450 — SET LOOP FILTER

S460 — GENERATE SYNCHRONIZATION TIMING

S470 — GENERATE DEMODULATION TIMING

S480 — DEMODULATION AND SYNCHRONIZATION DETERMINATION PROCESS

S490 — NORMAL SYNCHRONIZATION? — NO / YES

# FIG. 14

INITIAL SYNCHRONIZATION ACQUIRING PROCESS START — S321

SET WINDOW WIDTH TO MAXIMUM VALUE — S322

ACQUIRE INITIAL SYNCHRONIZATION — S323

GENERATE WINDOW — S324

SET WINDOW WIDTH TO INITIAL VALUE — S325

END — S326

# FIG. 15

EP 1 058 434 A2

```
        ┌─────────────────────────────┐
        │ DEMODULATION AND SYNCHRO-   │  S481
        │ NIZATION DETERMINATION      │
        │ PROCESS START               │
        └─────────────────────────────┘
                      │
        ┌──────────────────┐
        │  DEMODULATE      │  S482
        └──────────────────┘
                      │
                                        S483
    YES   ◇ BER DETERMINATION ◇   NO
          ◇       OK?          ◇
```

S484
COUNT EVENTS (Nok)
OF BER ≤ BER_TH

S488
COUNT EVENTS (Nber)
OF BER > BER_TH

S485
NO ◇ Nok > CONSTANT? ◇
YES

S489
◇ Nber > CONSTANT? ◇ NO
YES

ADJUST WINDOW WIDTH   S486

S48A
OUTPUT SYNCHRONIZATION
TIMING ERROR STATUS
(INITIAL SYNCHRONIZATION
ACQUIRING REQUEST)

OUTPUT SYNCHRONIZATION   S487
TIMING NORMAL STATUS

END   S48B

## FIG. 16

EP 1 058 434 A2

# FIG. 17

SYNCHRONIZATION
DETECTION

SYNCHRONIZATION
DETECTION

SYNCHRONIZATION
DETECTION

OPTIMUM
CORRELATION
VLUE

CROSS-
CORRELATION
VALUE

SYNCHRONIZATION
SIGNAL DETECTION
WINDOW

SYNCHRONIZATION
DETECTION SIGNAL

PREVENTION OF
MISDETECTION BY
DETECTION WINDOW

TIME

# FIG. 18

SYNCHRONIZATION
DETECTION

OUT OF
SYNCHRONIZATION

OPTIMUM
CORRELATION
VLUE

CROSS-
CORRELATION
VALUE

HIT

SYNCHRONIZATION
SIGNAL DETECTION
WINDOW

SYNCHRONIZATION
DETECTION SIGNAL

INITIAL
SYNCHRONIZATION

TIME

EP 1 058 434 A2